(19) Europäisches Patentamt
European Patent Office
Office européen des brevets

(11) **EP 4 126 508 B1**

(12) **EUROPEAN PATENT SPECIFICATION**

(45) Date of publication and mention
of the grant of the patent:
**24.04.2024   Bulletin 2024/17**

(21) Application number: **21723019.2**

(22) Date of filing: **30.03.2021**

(51) International Patent Classification (IPC):
**B29C 64/124** (2017.01)      **B29C 64/255** (2017.01)
**B29C 64/277** (2017.01)      **B33Y 10/00** (2015.01)
**B33Y 30/00** (2015.01)

(52) Cooperative Patent Classification (CPC):
**B29C 64/124; B29C 64/255; B29C 64/277;
B33Y 10/00; B33Y 30/00**

(86) International application number:
**PCT/IT2021/050091**

(87) International publication number:
**WO 2021/199094 (07.10.2021 Gazette 2021/40)**

(54) **APPARATUS FOR BOTTOM-UP STEREOLITHOGRAPHY WITH AN LCD LIGHT SOURCE WITH LED MATRIX AND TANK WITH ELASTIC MEMBRANE BOTTOM WITH REDUCED AND VARIABLE THICKNESS, AND METHOD OF USE**

VORRICHTUNG FÜR STEREOLITHOGRAFIE MIT EINER LCD-LICHTQUELLE MIT LED-MATRIX UND TANK MIT ELASTISCHEM MEMBRANBODEN MIT REDUZIERTER UND VARIABLER DICKE UND VERFAHREN ZUR VERWENDUNG

APPAREIL DE STÉRÉOLITHOGRAPHIE ASCENDANTE DOTÉ D'UNE SOURCE DE LUMIÈRE LCD À MATRICE À DEL ET RÉSERVOIR DOTÉ D'UN FOND À MEMBRANE ÉLASTIQUE AYANT UNE ÉPAISSEUR RÉDUITE ET VARIABLE, ET PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2020   IT 202000006640**

(43) Date of publication of application:
**08.02.2023   Bulletin 2023/06**

(73) Proprietors:
• **Axtra3D Incorporation
Dover, Delaware 19901 (US)**
• **Zitelli, Gianni
35122 Padova (PD) (IT)**

(72) Inventor: **ZITELLI, Gianni
35122 PADOVA (PD) (IT)**

(74) Representative: **Santi, Filippo et al
Barzanò & Zanardo Roma S.p.A.
Via Piemonte 26
00187 Roma (IT)**

(56) References cited:
**EP-A1- 3 575 062      US-A1- 2018 029 296
US-A1- 2018 341 184**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to an apparatus for bottom-up stereolithographic 3D printing with a light source of the LCD type with LED matrix and independent extraction tank with independent elastic membrane bottom with reduced and variable thickness and relative method of use.

More specifically, the invention relates to an innovative method for the production of three-dimensional objects, using a process for the photo-curing of photo-sensitive materials, suitably doped, which allows three-dimensional objects to be made according to a sequential formation process, considerably increasing the speed, the precision and the mechanical qualities of the final product, compared with what may be obtained using the methods of known type.

The invention relates to the field of three-dimensional printing, commonly referred to as 3D printing, and in particular to the technology of 3D printing by means of photo-curing, that is to say, curing of a particular type of polymer by exposure to a light radiation.

It is known that the field of 3D printing technology by photo-curing can comprise two basic technologies: stereolithographic printing, in which a laser emitting around 400nm is used, to solidify by means of the beam emitted a photo-curing polymer in the liquid state which is in a special tank; DLP printing (Digital Light Processing), according to which a photo-curing polymer (or liquid photo-curing resin), again in the liquid state in a tank, is exposed to the luminous radiation emitted by a device similar to a projector.

According to both these technologies, the printing process proceeds making one layer after another, that is, solidifying a first layer adhering to a supporting plate (or extraction plate) and then a second layer adhering to said first layer and so on until formation of the complete object. Therefore, according to this technology, the data representing the three-dimensional object to be formed are organised as a series two-dimensional layers which represent transversal sections of the object.

According to the Bottom-Up method, applied to machines both of the SLA and DLP type, the plate for extracting the object moves from the bottom upwards, with a layer-by-layer tilting movement.

Basically, the method for formation of three-dimensional objects comprises:

- a software subdivides the 3D model, provided as input for the printing, in an ordered succession of layers, with the thickness determined according to the technology adopted, the opacity of the polymer, the quantity of the catalyst, the degree of precision to be obtained and the characteristics of the machine provided, usually between 50 and 200 microns, but in any case a succession of a discrete and finite number of layers;
- a support plate, also called an extraction plate, consisting of a material which is able to facilitate the gluing on itself of the first layer of polymer, moves to a predetermined distance from the first layer and waits for the light beam (SLA or DLP) to solidify the first layer; it then raises by a distance sufficient for the layer just formed to detach from the base of the tank (usually approx. 1 mm) and then lowers by the same distance, less the predetermined distance for the formation of the second layer, and so on until forming the entire object.

The resulting to and from movement, also called the tilting movement, has two main purposes: it allows the layer just formed to detach from the base of the tank, and at the same time it allows a new quantity of liquid resin not polymerised to interpose between the layer just formed and the base of the container, to allow the refreshing of material still in the liquid state beneath the layer already solidified, for the curing and the formation of the next layer.

An issue, which is no less important, concerns the characteristics of the resin collection system, the so-called tank, which has the purpose of not merely containing the liquid polymer from which the printed three-dimensional object is obtained by photo-curing, but also facilitating the formation and the detachment of the layer which has just been formed, and facilitating the gluing towards the extraction plate, without the mechanical strength adversely affecting the integrity.

By analysing the characteristics of the prior art solutions it is possible to summarise the bottom-up collection systems, both for the DLP and SLA technologies, as follows:

- container of the resin, with hollow base;
- material transparent to light radiation, for covering the bottom;
- membrane of non-stick material for covering the transparent material.

A hole is made, usually at the centre of the collection system, to allow the passage of the light beam for triggering the photo-curing phenomenon; the hole is covered with glass which has excellent transparency characteristics to light radiation (in order not to lose incident luminous power), such as, for example, quartz and borosilicate glass. Lastly, the most important part to allow the correct performance of the process certainly concerns the coverage of the glass with a membrane of non-stick material, to allow the first layer to adhere to the extraction plate and the successive layers to join together in sequence.

The failure of this process would result in the falling of the layer just formed onto the base of the tank, interrupting the forming process and causing the failure of the printing routine.

The limiting effects of this technology, which render the production of the object very slow (up to hours per centimetre), very unstable and with the capacity to make objects with small dimensions, are investigated below.

The first limitation in adopting bottom-up photo-curing technologies is that of the non-stick capacity of the layer positioned above the base glass.

In fact, as mentioned above, this type of three-dimensional printing is based on the capacity of the layer just formed to link, in the first layer to the extraction plate, and in the successive layers to the layer which precedes it. If, however, the mechanical strength set up by the lower membrane is greater than the cohesion force of the upper membrane, the hardened layer will inevitably remain on the base of the tank, interrupting the process for creation of the three-dimensional printed object.

Apart from the most recent innovative techniques, such as the control of the inhibition layer with oxygen or self-lubricating materials, there are two well-known and widely adopted solutions for making the non-stick membrane positioned above the base glass:

- the use of materials such as Teflon or polytetrafluoroethylene, also known as PTFE;
- the use of silicone-based materials, such as polydimethylsiloxane, also known as PDMS.

Firstly, Teflon and PTFE are particularly suitable for 3D printing applications, since they have a high thermal capacity (important in controlling the exothermic reaction of photo-curing) and at the same time a very low coupling (almost inert behaviour) with photo-curing resins, which are particularly aggressive/reactive with other materials.

The main disadvantage that makes Teflon and PTFE almost inapplicable (except for particular applications with a very low cross-sectional area of the object to be printed) is the absolute lack of elastic capacity of these materials. In particular, according to this prior art technology, a Teflon sheet (with a thickness of between 125 and 250 microns) is usually placed on the glass plate at the bottom of the tank, with no air between the Teflon sheet and the glass plate. Under these conditions, the Teflon sheet tends to adhere perfectly to the sheet of glass, inevitably becoming a single body with the bottom of the tank. As will be explained later, this condition of rigidity generates, between the newly cured object and the Teflon, a phenomenon known as the suction cup effect, which causes a mechanical stress that tends (especially for wedge-shaped objects) to plastically deform the Teflon, making it impossible to continue the printing process and/or re-use the tank and, more importantly, the enormous mechanical stress generated during the tilting phase tends to "break" the object, making the printing success random and non-repeatable.

PDMS and silicones, on the other hand, are the most widely used materials, as they respond to a compromise between chemical interaction and mechanical stress.

Typically, these materials are poured and then glued to the bottom of the tank and, using special techniques, flattened to ensure the planarity between the extraction plate and the bottom of the tank (to ensure the formation of a layer without deformations).

These materials are preferred because the greater surface 'tenderness' of the non-stick membrane placed above the bottom glass reduces the suction cup effect, as explained below.

The main disadvantage that limits the application of these materials and makes the stabilisation of the printing process extremely complex is their limit of applicability, that is, their lower thermal resistance and greater chemical coupling with the resin.

In fact, the silicone material tends to absorb the resin more easily and the exothermic reaction produced by polymerisation (locally exceeding 400° with some resins) tends to crystallise the PDMS, with the result that the subsequent movement of the extraction plate generates a mechanical stress that tends to "stretch", and therefore whiten, the support material (a phenomenon known as "white shadow"). Once again, this loss of capacity makes the printing process unstable.

In this context, a particularly innovative technology has been described in patent document EP3356122, relating to a method and device for forming three-dimensional objects by bottom-up photo-curing of a liquid photo-curing polymer exposed to a radiation, in which a self-lubricating substrate is used, that is, a membrane, transparent to the photo-curing radiation, covered by a layer of liquid lubricant, released gradually from said membrane.

The second limitation in the adoption of bottom-up photo-curing technologies is the so-called suction cup effect, which occurs between the surface of the object and that of the membrane of non-stick material which covers the transparent sheet to the light radiation placed on the bottom of the tank.

It is noted immediately how the conditions for the occurrence of this phenomena arise. In effect, the layer immerses in the resin until it is at a distance s (thickness of the Nth layer) from the non-stick membrane (both the surfaces are coplanar and perfectly flat to give precision to the layers which will be formed); so a new layer is generated by photo-curing. The absence of air in fact creates the vacuum between the two surfaces, which are surrounded by a liquid with a higher viscosity, in particular, the larger the two surfaces in contact are, the more the supports which contain the layer being formed are rigid; the mechanical stress suffered by the system and, consequently, by the new layer being formed (which is only a few tenths of a millimetre in thickness) is enormous, with the risk of tearing the layer which has just been formed, which will not attach to the upper surface, leading to the interruption of the printing process.

In order to reduce the effects of this phenomenon, the process proceeds in such a way that the surface of the extraction plate and of the objects to be created are sufficiently small (usually with technologies of this type objects are created with dimensions of approx. 4x4, 5x5 centimetres) and at the same time the raising speed of the extraction plate during the tilting step is extremely reduced, considerably increasing the printing time (generically the tilting time is approx. 40% of the total time).

The best solution, however, is to use a membrane of non-stick material with a certain degree of flexibility to generate a peeling phenomenon. In particular, the use of a silicone-based membrane, which has a high elastic capacity, and the simultaneous removal (or distancing) of the rigid bottom of the tank, allows the activation of the peeling phenomenon and, therefore, a significant reduction in the suction effect.

However, in "free-field" elastic membrane printing the following three problems arise:

- the "string" phenomenon, due to gravity, generates a distortion of the layer and a loss of precision,
- the lack of compression of the newly formed layer between two rigid layers weakens the adhesion of the object to the extraction plate, and
- the "exfoliation" effect of the object is increased, again due to the lack of compression between two rigid planes.

According to an alternative technique, the elastic membrane is placed on a rigid support. This technique would theoretically be the ideal solution for the immediate resolution of the problem of the suction cup effect, at the same time without running into the problems of the "free field" membrane system, since the bottom of the tank would provide its contribution of reference and compression, while maintaining the planarity of the membrane and at the same time the elastic membrane, free to "follow" the detachment of the object, would reduce the suction cup effect.

The silicone material would also benefit, reducing the mechanical stress to which the crystallising portions of the material are subjected by the thermal effect.

In reality, the membrane itself, resting on the rigid support, and removing the air separating them, tends to stick above it, effectively transferring the suction effect between the two media, and cancelling out all the benefits mentioned above.

In this context, a particularly innovative solution has been described in patent document WO2019186611, relating to a 3D printing apparatus of the bottom-up photo-curing type, with an elastic membrane resting on a rigid support, constituted by the perforated bottom of the tank and by the sheet of glass covering the hole, in which the rigid support is connected to means which generate a tilting movement with respect to the rest of the tank, and in which an arrangement is applied (such as, for example, a pressure/decompression system, or a layer of adhesive component, between the rigid support and the elastic membrane) on the interface between the rigid support and the elastic membrane which results in an adherence between the rigid support and the elastic membrane greater than that between the same elastic membrane and the layer just formed, thereby achieving the advantage of a high compression and precision of the layer being formed, since the rigid system on which the elastic membrane rests makes it possible to overcome the string problem which would be generated by an elastic membrane without reference, at the same time counteracting the development of the suction cup effect, the rigid support being made to rotate around a hinge axis, inducing a peeling phenomenon between the rigid support and the elastic membrane.

In any case, all these technologies provide for a "containment" of the suction cup effect, and therefore a reduction in the mechanical stress induced, which are elements that guarantee an increase in the speed of production of the objects and an increase in the repeatability performance of the process and the quality of printing.

Recently, a further problem has begun to be perceived as relevant, which was previously unheard of because the intrinsic inaccuracies of 3D printing systems did not allow them to achieve a polymerisation resolution such as to show this phenomenon on the surfaces, and which has recently emerged by virtue of the high technological and chemical accuracy and the extreme precision of the processes which have been achieved.

This phenomenon is called aliasing and consists in the fact that objects generated by digital systems are represented by a plurality of minimal units, the smaller they are the greater the resolution, which can be perceived on the surface of the objects, to the detriment of the smoothness of the surface itself. This phenomenon is also known in the field of 2D digital printing (and more generally in the two-dimensional digital reproduction of text or images), where the corresponding minimum units are called pixels and where the printing resolution depends on the size of the pixel, and where a contour (that is, an approximation of the image contour) is generated, the size of which is equal to the size of the pixels.

In fact, as known, 3D printing systems use light sources, generally lasers or LCD (Liquid Crystal Display) projectors with a predefined wavelength, to cure the photo-curing resin. By using laser systems, the production of objects is particularly accurate in terms of the quality of the surface produced, but they are by definition non-isotropic (in terms of mechanical behaviour), extremely slow in production and time-varying, not only depending on the height of the object but also on the quantity of objects printed simultaneously by the same machine. In order to overcome these problems, the prior art has introduced LCD-type projection systems, which allow for the instantaneous curing of an entire layer of the object to be printed, thus guaranteeing greater mechanical performance, higher speed and invariant time.

In fact, when using LCD-type systems, it makes sense to talk about a kind of XY resolution of the printed object, equal to the size of the pixel actually projected.

Looking in more detail at the construction and operating characteristics of LCD projection systems, it is also evident that this type of light source has a number of other limitations, which are intrinsic to the structure of this type of projector.

In fact, the LCD matrix, which generates the shape of the layer to be cured, is in turn illuminated from behind by a matrix of LEDs (Light Emitting Diodes), placed at a distance dLCD from the LCD matrix and at a distance between LEDs defined as dL. The image generated by the LCD matrix, which in effect behaves like a mask, thus sees illumination arriving from several point sources (LED1, LED2, LED3, ...) at a distance dL from each other.

In turn, the LCD matrix is placed under the layer of non-stick material, which, regardless of its chemical composition, plays the role of solving the suction cup effect. The layer of non-stick material is in fact an elastic material (mostly silicone) of thickness D, usually of considerable size (at least 5 mm). The layer to be cured is then at a distance D from the LCD matrix.

The light rays of the point LED sources, which are spaced apart by a distance dL, then reach the layer to be cured at different incident angles, after travelling the distance dLCD and subsequently crossing the layer of non-stick material by a distance D, generating distortions of the image actually under polymerisation to form the layer to be cured. In fact, these distortions cause a sort of boundary area with respect to the desired image, where an unwanted polymerisation occurs.

In order to correct this problem, the realisation of systems of light filtration and collimation have been proposed according to the prior art, achieved by means of diaphragms, collimators or reflectors of the type with Schmidt-Cassegrain configuration. These systems make it possible to eliminate all unwanted light rays through the diaphragms and also, thanks to the collimation lenses, to parallelise the light emitted by the LED matrix, in order to obtain an image at the polymerisation interface which is very close to the desired image.

US2018/029296 discloses a 3D printing systems comprising a LED matrix LCD light sources, to cure a photo-curing resin.

However, even this type of solution has inherent residual limitations, linked to the implementation, such as:

- the loss of 80% of useful energy, due to the shielding of the diaphragms;
- the generation of shadow zones (energy loss) in the transitions between collimators, that is, in the border zones between two collimators;
- the inability to achieve a surface illumination uniformity of more than 70%;
- the loss of geometric accuracy due to the distortion introduced by the collimators;
- the rise in temperature of the system and the loss of LED and LCD efficiency;
- increased implementation costs;
- the need for air-cooling systems, with problems associated with the formation of dust on lenses and LEDs;
- non-uniformity of polymerisation, due to non-uniformity of irradiation; and
- the reduction in performance associated with curing time and therefore the printing speed.

The solution according to this invention is inserted in this context, which proposes to remove the suction cup effect, and no longer merely to contain or reduce it, while at the same time proposing to reduce the aliasing effect in a bottom-up stereolithographic 3D printing apparatus with a light source of the LCD type with LED matrix and an independent extraction tank with an independent elastic membrane bottom with reduced and variable thickness.

These and other results are obtained according to the invention by proposing an apparatus for bottom-up stereolithographic 3D printing with a light source of the LCD type with LED matrix, which is based on the concept of having to resolve the suction cup effect by resorting to the use of a layer of non-stick material (or any other strategy of prior art of three-dimensional formation, whether it be oxygen, hydrogel, or silicone oils) of negligible thickness, in such a way as not to significantly affect the distortion of the image, consequently being able to define the characteristics of the light radiation that causes the curing of the liquid photo-curing material in a controlled manner, in order to compensate for the phenomenon of aliasing. To this end, according to the invention, an apparatus is proposed for bottom-up stereolithographic 3D printing with a light source of the LCD type with LED matrix with reciprocal distance of the LEDs and distance between the LED matrix and the display, that is, the LCD matrix, defined as a function of the power to be obtained on the display and of the angle of opening of the emission diagram of LEDs, wherein said light source and the system constituted by the tank, and in particular by its bottom, made of a layer of non-stick material of the free-field elastic membrane type of negligible thickness, are separated from each other, so that they can move away from each other and move towards each other. This result can be obtained by arranging the display of the light source of the LCD type with LED matrix in contact with the bottom of the tank, constituted by the layer of non-stick material, and by providing that the display, together with the body of the light source, is detached from the bottom of the tank, that is, it can move with respect to the bottom of the tank with a tilting movement, around a hinge arranged on one side of the display, or with a translating movement.

Alternatively, according to another embodiment of the invention, the same result can be obtained by keeping the light source stationary and moving the extraction plate and the tank in an integral fashion, so that they move away from the light source, then firstly bringing the bottom of the tank back into contact with the light source and then bringing the extraction plate back closer to the bottom of the tank, at the distance necessary for the formation of the next layer of the object being printed.

Furthermore, the possibility of having a bottom made of a layer of non-stick material of the free-field elastic membrane type wherein the thickness can be negligible allows a margin of variation in the thickness of the bottom, which can be determined in such a way as to compensate for the aliasing effect.

A first specific object of this invention therefore relates, according to claim 1, to a an apparatus for 3D printing of the bottom-up photo-curing type, comprising a light source of the of the LCD type with LED matrix, above which is positioned a tank, containing a liquid photo-curing material, within which is immersed an extraction plate, provided with means of movement with reciprocating rectilinear motion, along a direction perpendicular to the bottom of said tank, from a position at a distance from the bottom of said tank equal to the thickness of a layer which can be obtained by photo-curing of said photo-curing liquid material, the bottom of said tank being constituted by an elastic membrane transparent to the radiation of said light source, said tank being positioned at a hole of a support plate, said apparatus comprising means for the relative movement of said light source with respect to said elastic membrane, from a position wherein the display of said light source is in contact with said elastic membrane, to a position wherein the display of said light source is moved away from said elastic membrane, wherein the distance dL between the LEDs of said LED matrix is equal to

$$dL = \sqrt{(E_{TOT}/\pi \; \delta_{LED})}$$

where $E_{TOT}$ is the nominal energy of the LEDs used and $\delta_{LED}$ is the set energy density and the distance dLCD between said LED matrix and said display is defined as a function of the emission diagram of said LEDs, that is, it is such that, at the display, given the emission angle $\alpha$ of each LED, gives

$$dLCD = dL \cdot cotg(\alpha/2)$$

to be designed for eliminating the use of diaphragms and collimators, and the thickness D of said membrane is chosen as a function of the distance dLCD between said LED matrix and said display and is determined as a function of the acceptable error, expressed as a function of the size p of the single pixel of said display and equal to p/2, that is, determined by the relationship

$$D = p/2 \cdot cotg(\alpha/2)$$

to introduce a diffusion system, equal to the acceptable error, to help compensate for the aliasing phenomenon.

Moreover, according to the invention, said light source is coupled on one side, with possibility of rotation about a hinge axis, to said support plate, the opposite side of said light source being coupled to a handling system.

A second specific object of the invention is, according to claim 3, a bottom-up photo-curing 3D printing method, implemented by means of the apparatus defined above, comprising the following steps:

a) forming on an extraction plate a solid layer by photo-curing a liquid photo-curing material within a tank, in the space between an extraction plate and an elastic membrane forming the bottom of said tank, wherein an LCD display of a light source is in contact with the lower side of said elastic membrane;
b) removal of said LCD display from said elastic membrane;
c) lifting of said extraction plate, with progressive detachment of said elastic membrane;
d) returning of said light source to the initial position, with said LCD display in contact with said elastic membrane;
e) lowering said extraction plate to a position wherein the last layer of photo-cured material is at the distance of a layer to be formed with respect to said elastic membrane.

Finally, a third specific object of the invention is, according to claim 4, a 3D printing method of the bottom-up photo-curing type, implemented by means of the previously defined apparatus, comprising the following steps:

a) forming on an extraction plate a solid layer by photo-curing a liquid photo-curing material within a tank, in the space between an extraction plate and an elastic membrane forming the bottom of said tank, wherein an LCD display is in contact with the lower side of said elastic membrane;

b) distancing said elastic membrane, that is, said tank, and at the same time said extraction plate, from said LCD display, with progressive detachment of said elastic membrane from said display;

c) returning said elastic membrane, that is, said tank, to the initial position, in contact with said display, said extraction plate remaining fixed, with progressive detachment of said elastic membrane from the last cured layer of the object being printed;

d) lowering said extraction plate to a position wherein the last layer of photo-cured material is at the distance of a layer to be formed with respect to said elastic membrane.

The invention is now described, by way of example and without limiting the scope of the invention defined by the appended claims, according to a preferred embodiment, with reference to the accompanying drawings, in which:

- Figure 1 shows a perspective view of an apparatus for bottom-up stereolithographic 3D printing with a light source of the LCD type with LED matrix and an independent extraction tank with an independent elastic membrane bottom with reduced and variable thickness according to a first embodiment of the invention, in a first position, suitable to allow a curing step of a layer of a three-dimensional object to be printed;
- Figure 2 shows a perspective view of a portion of the apparatus of Figure 1, in a second position, to allow the detachment from the bottom of a newly formed layer of a three-dimensional object to be printed;
- Figure 3 shows an exploded perspective view of the apparatus of Figure 1;
- Figure 4 shows a perspective view of an apparatus for bottom-up stereolithographic 3D printing with a light source of the LCD type with LED matrix and an independent extraction tank with an independent elastic membrane bottom with reduced and variable thickness according to a second embodiment of the invention, in a first position, suitable to allow a curing step of a layer of a three-dimensional object to be printed;
- Figure 5 shows a perspective view of a portion of the apparatus of Figure 4, in a second position, to allow the detachment from the bottom of a newly formed layer of a three-dimensional object to be printed; and
- Figure 6 shows an exploded perspective view of the apparatus of Figure 4.

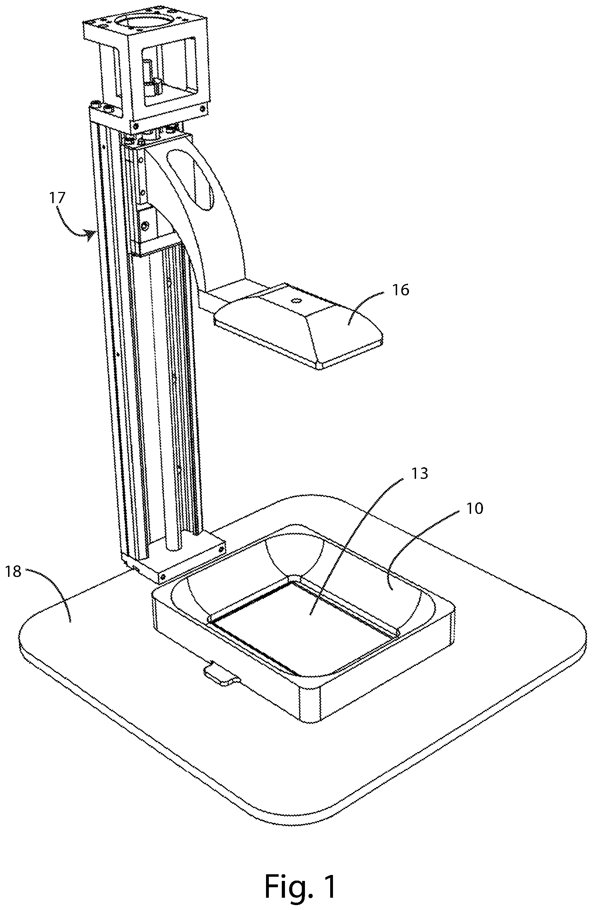

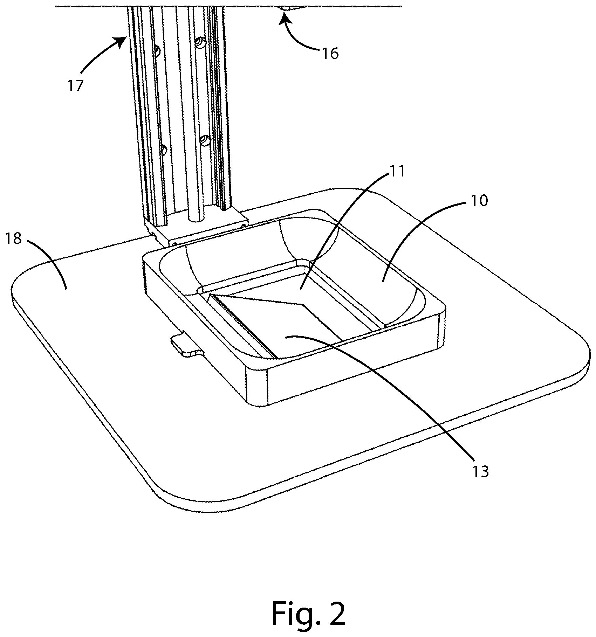

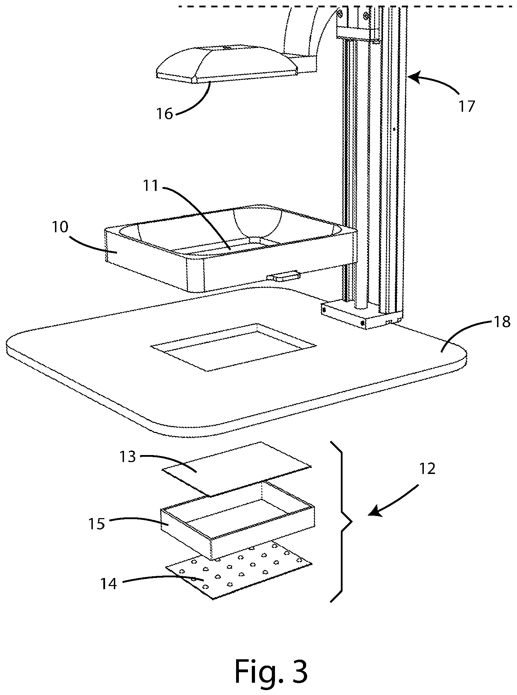

Referring preliminarily to Figures 1-3, the elements of an apparatus for bottom-up stereolithographic 3D printing with a light source of the LCD type with LED matrix and an independent extraction tank with an independent elastic membrane bottom with reduced and variable thickness according to the invention essentially comprise a tank 10 (which can be considered as a consumable), with a bottom 11 constituted by a membrane made of free-field elastic material; a light source 12 of the LCD type with LED matrix, provided with a display 13 or LCD matrix and a LED matrix 14, distanced from the display 13 by means of a support structure 15; and an extraction plate 16 with a respective movement and support system 17, the extraction plate 16 being designed for housing on its lower surface the first layer of the object to be printed, obtained by photo-curing of the photo-curing liquid material by the effect of the radiation of the LCD light source 12, as well as for progressively extracting the object from the tank 10, with the alternative lifting and partial lowering movement typical of bottom-up photo-curing type 3D printing systems.

The tank 10 and the light source 12 are coupled to the rest of the apparatus by means of a support plate 18, which has a hole for the passage of the radiation coming from the light source 12 and directed through the bottom 11 of the tank 10 in order to obtain the curing of the layers which will form the object to be printed.

In particular, the bottom 11 of the tank 10 consists of a membrane of elastic type (elastic membrane in free field), inserted with preload (that is, with a certain degree of tension) between the walls of the tank 10.

The light source 12, as mentioned, is of the LCD type with LED matrix, or more precisely, with LED backlighting of the so-called "luminous mat" type, to allow, by means of a dedicated microprocessor, dynamically acting on the various portions of backlighting, optimising them on the basis of each individual frame being reproduced, thus significantly improving the contrast. Between the LED matrix 14, which forms the "light mat", and the LCD display 13, there is a support structure 15, the function of which is to maintain the defined distance between the LED matrix and the LCD display 13.

A first side of the body of the light source 12 is coupled with a possibility of rotation about a hinge axis to the support plate 18, while the remaining sides of the body of the light source 12 are free with respect to the support plate 18. The body of the light source 12 is connected to a movement system (not shown), which rotates the body of the light source 12 about the hinge axis, moving the LCD display 13 away and subsequently bringing the LCD display 13 close to the bottom 11 of the tank 10.

Thanks to this configuration, each phase of polymerisation of the liquid resin by exposure to the radiation of the light source 12 to obtain a layer of the object being printed, is accomplished while the LCD display 13 is rigidly attached to the bottom 11 of the tank 10, allowing the system to behave like a classic bottom-up photo-curing 3D printing machine, wherein the layer being formed is compressed between two rigid bodies, with the consequent advantage of a high compression and precision of the layer (there is no problem of the string that would be generated by an elastic membrane without reference), but at the same time, the suction cup effect would be generated.

In order to counteract the occurrence of the suction effect, in the following phase the light source 12 is rotated around the hinge axis, detaching itself from the elastic membrane forming the bottom 11 of the tank 10, which instead remains attached by the suction effect to the newly cured layer. Subsequently, the extraction plate 16 is raised to detach the layer from the elastic membrane of the bottom 11 of the tank 10. The elastic membrane triggers the peeling phenomenon by gently peeling off from the newly formed layer. The removal of the LCD display 13 from the base of the elastic membrane of the bottom 11 of the tank 10 allows detachment of the newly formed layer, reducing/eliminating the suction cup effect previously described. In the next step, the elastic membrane, detaching itself from the newly formed layer, returns to its rest position. Subsequently, the extraction plate 16 descends towards the bottom 11 of the tank 10, returning to the position of printing the next layer. Finally, in the last step, the body of the light source 12 is rotated around the hinge axis to return to its starting position, so that the formation of the next layer can be started.

It is evident that the printing process described allows the suction cup effect to be reduced/removed, allowing a gentle removal of the elastic membrane of the bottom 11 of the tank 10 from the newly formed layer, thanks to the peeling effect resulting from the progressive moving away of the extraction plate 16 from the bottom 11. At the same time, when forming the layer, the position of the LCD display 13, in contact with the bottom 11 of the tank 10, allows a layer to be made with high compression and precision.

Preferably, an arrangement is applied to the interface between the LCD display 13 and the elastic membrane forming the bottom 11 of the tank 10 which results in a greater adhesion between the LCD display 13 and the elastic membrane which is greater than that established between the elastic membrane and the last formed layer of an object being printed, inducing a peeling phenomenon between the LCD display 13 and the elastic membrane forming the bottom 11 of the tank 10. This arrangement could, by way of example, comprise a pressure/decompression system, or the presence of a layer of adhesive component arranged between the LCD display 13 and the elastic membrane forming the bottom 11 of the tank 10.

This arrangement has the result of increasing the suction cup effect between the LCD display 13 and the bottom 11 of the tank 10, thanks to which, after each step of polymerisation of the liquid resin due to the exposure to the radiation of the light source 12 in order to obtain a layer of the object being printed, in the following step, when the body of the light source 12 is rotated around the hinge axis, due to the fact that the adhesion force between the rigid support the LCD display 13 and the elastic membrane is greater than the adhesion force generated between the elastic membrane and the newly cured layer, the display 13 tends to carry the elastic membrane with it, allowing a controlled detachment (reverse peeling) of the elastic membrane from the display 13, with a consequent reduction of the mechanical stress to which the elastic membrane is subjected. Moreover, the movement of the elastic membrane away from the newly formed layer, which results from the fact that the elastic membrane tends to follow the LCD display in its movement, generates a volume below the newly cured layer, which is filled by the liquid resin, thus increasing the filling speed of the space between the newly formed layer and the elastic membrane (refresh), making it unnecessary to move the extraction plate 16 away from the bottom 11 of the tank 10, and then bring it closer again to proceed with the formation of a new layer.

Alternatively, according to the invention, the movement of the light source 12 with respect to the bottom 11 of the tank 10 can be achieved by a translation movement.

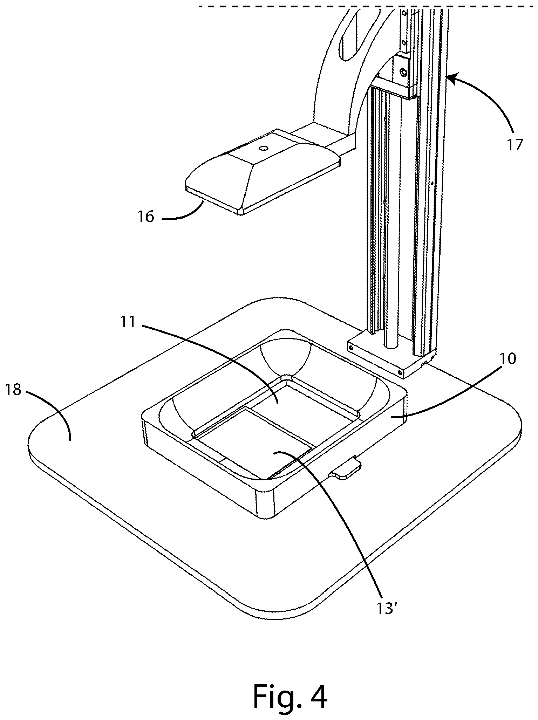

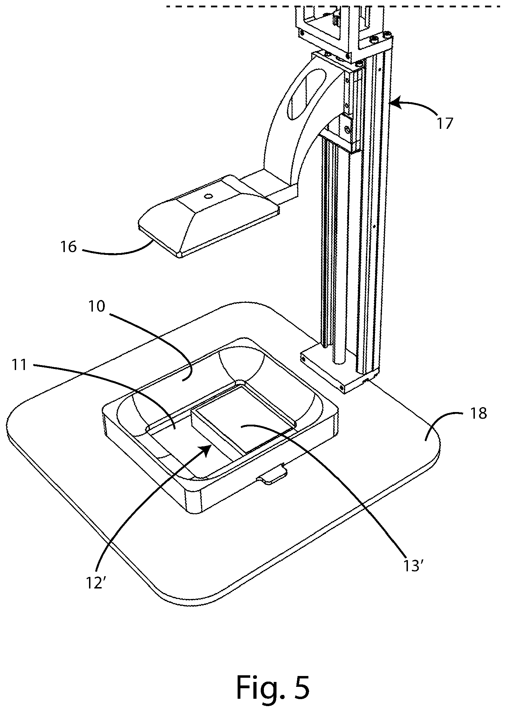

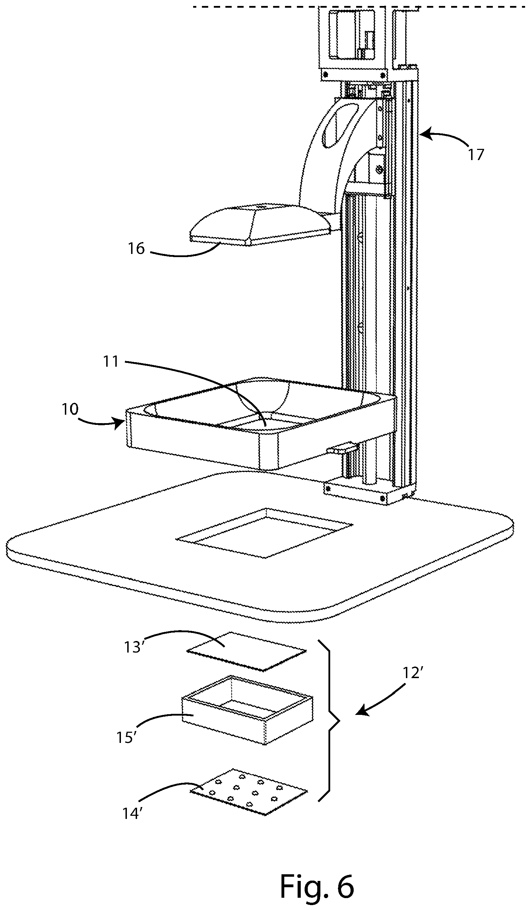

In particular, according to this alternative embodiment, referring to Figures 4-6, the body of the light source 12' is mounted on a motor which allows the translation of the light source 12', and in particular of the LCD display 13', from a first position, in contact with the bottom 11, to a second position, wherein the bottom 11 is free.

In the printing step, the light source 12' is initially positioned under the extraction plate 16, so that the LCD display 13' is interposed between the elastic membrane of non-stick material forming the bottom 11 of the tank 10 and the LED matrix source 14'. Once in position, the irradiation and generation of the first layer of the object to be printed is performed. After the first layer is formed, the light source 12' is moved to a second position, which is not under the extraction plate 16. The extraction movement of the extraction plate 16 is then performed in a condition in which the elastic membrane of non-stick material constituting the bottom 11 of the tank 10 behaves like a free-field membrane. At this point, the light source 12' is again moved to the position below the extraction plate 16, for the formation of a second layer of the object to be printed. The process described above is continued until the object is printed.

It is clear that, by using this method, the suction effect is not only contained but definitively eliminated, like a suction cup attached to a sheet of glass, which rather than being deformed on one side to allow air to enter (peeling phenomenon), is actually moved to the edge of the sheet of glass. On this occasion, the perpendicular component, which opposes the detachment of the object from the elastic membrane and generates the suction cup effect, is effectively cancelled out.

Moreover, according to this embodiment of the 3D printing apparatus according to the invention, it is also possible to achieve a further technical effect. In fact, by translating the LCD display 13' and keeping the bottom 11 of the tank 10, which is made of flexible non-stick material, stationary, no mechanical stress is generated on the lower surface of the last formed layer of the object being manufactured, since during the translation step of the light source 12' the newly cured layer and the membrane of non-stick material forming the bottom 11 of the tank 10 remain stationary.

In particular, as shown in Figures 4-6, according to an alternative embodiment of the invention, the LCD display 13' has an extension equal to half that of the bottom 11 of the tank 10 and the body of the light source 12' is mounted on a motor which allows the translation of the light source 12', and in particular of the LCD display 13' from a first position, in contact with a first half of the bottom 11, to a second position, in contact with the remaining half of the bottom 11.

According to a further alternative embodiment of the invention, movement of the light source 12 relative to the bottom 11 of the tank 10 may be achieved by a movement of the tank 10 rather than of the light source 12.

In particular, according to this alternative embodiment, not shown, following the curing step of a layer of the object to be formed, in which the membrane of non-stick material is directly above the LCD display or matrix, the extraction plate and the tank 10 move in an integral fashion upwards to resolve the suction cup effect. The tank with the membrane of non-stick material return to the position above the LCD display, while the extraction plate remains stationary, allowing a second step of removal of the suction cup effect, achieved by peeling between the membrane and the newly cured layer. Finally, the extraction plate is lowered towards the bottom of the tank, to the distance required for the formation of a further layer of the object to be printed.

This alternative embodiment has the advantage of overcoming a technical limitation, which is extremely complex to resolve, that is typical of prior art embodiments, whereby the mechanical repositioning of the light source 12, 12' between one layer and another must be extremely precise, otherwise the light source would cure layers that are not aligned with each other, compromising the printing quality. The solution according to the latter embodiment of the invention has, on the other hand, the purpose of solving the problem of repositioning the light source between one layer and another, as well as reducing the cost of making the apparatus.

This embodiment allows a number of advantages to be pursued:

- the resolution of the suction effect is split between the step of lifting the tank and LCD display and the subsequent step of moving the tank away from the extraction plate, splitting the peeling phases in two (rather than resolving the suction effect at once); this reduction in the peeling effect resulting in higher printing quality. In addition, this embodiment solves the technical problem of repositioning the LCD display in its original position.

The configurations described make it possible to use a light source that is mechanically detached from the tank and, above all, a particularly thin non-stick material, that is negligible in thickness compared to the projection of the light rays. In fact, the thickness of the non-stick material is so thin compared to the light path of the LEDs that the distortion introduced is negligible.

According to the invention, and as will be described below, the possibility of having an elastic membrane whose thickness is released from mechanical considerations makes it possible to choose the thickness of the elastic membrane constituting the bottom 11 of the tank 10 as a function of the optical paths, in order to introduce a natural anti-aliasing effect, which is able to increase the surface quality of the objects to be printed, as will be explained below.

As previously mentioned, in bottom-up stereolithographic 3D printing systems using an light source of the LCD type with LED matrix, collimation systems are introduced in order to compensate for image distraction problems. In order to make the collimators effective, a large portion of the light emitted by the individual LED must be eliminated through the use of diaphragms, chosen according to the emission pattern of the LED itself.

Although the lens on top of the LED source can be chosen to have a narrow beam, in order to allow the collimator to work correctly, the actual usable angular portion of light is extremely small. This is one of the reasons why the percentage of radiation actually usable in the active part does not exceed 20% of the light actually delivered by the LED matrix, with a considerable loss of efficiency on the one hand and of curing performance on the other, not to mention the thermal problems that arise from having to increase the number of LEDs in the matrix (hence the reduction in the distance dL between the LEDs in the matrix).

Using this strategy, through diaphragms and collimators, in addition to the loss of energy and therefore of system efficiency and performance, an even more limiting problem is introduced, which to date is one of the major limitations for this type of light source, that is to say, it is extremely complex to achieve satisfactory uniformity of illumination, particularly in the transition between one diaphragm and another (so-called "black dots"). This affects the polymerisation of the single layer, which is not uniform and therefore leads to an inevitable loss of quality in the printed objects.

The possibility of determining the thickness of the elastic membrane of non-stick material forming the bottom 11 of the tank 10 with a particularly thin thickness, that is, without being influenced by limitations of a mechanical nature in the choice of thickness, allows the thickness to be chosen in such a way as to make it possible to eliminate the use of diaphragms and collimators, in order to obtain greater light intensity and at the same time a greater quality of light distribution at the polymerisation interface. In fact, by exploiting the emission diagram of the LEDs and their overlap, by correctly sizing the distance dL between the LEDs of the matrix and the distance dLCD between the LED matrix and the LCD display, it is possible to eliminate the problem of the black dots in the LED matrix transitions.

In particular, it is possible to define two of the three variables to be characterised (dL and dLCD), which depend on the emission diagram of each individual light source and the power density to be obtained on the display, which is a function of the density of LEDs installed in the matrix; in fact, as the number of LEDs increases, the power at the interface will increase, but the distance dLCD will decrease. Finally, by working appropriately on the D dimension (the thickness of the non-stick material above the LCD display), it is possible to achieve maximum performance levels with regard to reducing the aliasing effect.

Thus, following the solution according to the invention, it is possible to define one of the 3 variables to be characterised (dL), namely the distance between the LEDs of the emission matrix, which is dependent on the emission diagram of each individual light source. Finally, it will be seen that by working appropriately on the other two variables dLCD (the distance between the LED matrix and the LCD matrix) and D (the thickness of the non-stick material placed above the display), it will be possible to obtain the maximum performance, relative to the reduction of the aliasing effect.

Imposing, consequently, the geometrical conditions, for the definition of the distance dL it is imposed that the distance between two LEDs, defined on the one hand as a function of the emission diagram, on the other hand determines the value of the thickness of the non-stick layer, once the desired error deviation has been imposed, as described below. The distance dLCD between the LED matrix and the LCD display is a function of the emission profile of the individual LED. In particular, the distance dL between two LEDs of the LED matrix is defined according to the desired energy density and the nominal energy of the LEDs used, and is:

$$\delta_{LED} = E_{TOT}/\pi\ dL^2$$

from which it follows that

$$dL^2 = E_{TOT}/\pi\ \delta_{LED}$$

$$dL = \sqrt{(E_{TOT}/\pi\ \delta_{LED})}$$

After defining the distance dL between two LEDs of the LED matrix, it is possible to define the distance dLCD of the LCD display, or LCD matrix, from the LED matrix, as a function of the opening angle $\alpha$ of the emission diagram of the individual LED; for the energy on the display to be uniformly distributed, the distance dLCD must be such that, at the display (or LCD matrix), the emission cone of one LED intersects the axis passing through the centre of the adjacent LED. In trigonometric terms, it will therefore be:

$$dLCD = dL \cdot cotg(\alpha/2)$$

A parameter p, representing the size of a single pixel in the LCD matrix, is also defined, and an acceptable error of half a pixel (p/2) is imposed, precisely to introduce a diffusion system, equal to half the maximum permissible resolution, which helps to compensate for the aliasing phenomenon. The thickness D of the non-stick membrane can therefore be appropriately dimensioned by choosing a value that allows the introduction of a diffusion equal to p/2.

In particular:

- dL and dLCD being constant and defined according to the type of LED emission diagram,
- the resolution being known and, therefore, the value of the pixel p being defined and constant,

one can proceed to calculate the value D, equal to the thickness that must be imposed on the elastic membrane of non-stick material forming the bottom 11 of the tank 10 in order to introduce an error equal to half a pixel. In particular, the dimension D (the thickness of the non-stick material placed above the LCD display) is expressed by the relationship

$$D = p/2\ cotg\ (\alpha/2) = p/2\ (cos\ (\alpha/2)/sin\ (\alpha/2))$$

It is evident that the error trend is linear with respect to the thickness D of the anti-aliasing material: as the thickness of the membrane increases, the error introduced also increases and therefore the anti-aliasing effect, while, on the contrary, as the thickness of the membrane decreases, the diffusion decreases to the advantage of precision.

In conclusion, it is possible to summarise the features of the invention as follows.

The use of an LCD tilting or translating system, wherein the non-stick membrane can remain fixed during the detachment step, or the system wherein the non-stick membrane moves away while the light source remains fixed, makes it possible to use a non-stick membrane with variable thickness, allowing different intensities of diffusion, and therefore of antialiasing, to be obtained depending on the printing result to be obtained. By using thicker membranes (although still extremely thin), such as 250 micron Teflon membranes, the antialiasing effect can be increased, resulting in smoother surfaces. On the other hand, by working with 90 and 125 micron Teflon membranes, the geometric precision of the printed object can be increased.

In conclusion, the advantages of the solution according to the invention are as follows:

- reduction of the suction cup effect: by resolving the suction cup effect between the LCD display and the non-stick material, no mechanical stresses are introduced during the formation of each newly cured layer.
- increase in the light source performance and efficiency: by being able to work with extremely thin membranes, it is possible to build LCD-type light sources with an LED matrix that do not use collimators, diaphragms or reflectors, increasing the energy available for layer polymerisation by a factor of four, and thus reducing the polymerisation time and thermal problems for management of the LED matrix;
- better uniformity of illumination: by not having to use collimation systems, and working directly on the distance of the LEDs in the matrix, a better result of uniformity of light irradiation on the polymerisation interface can be obtained, eliminating the problem of the black dots.

The solution according to the invention, by allowing the use of non-stick materials, such as Teflon, with an extremely reduced but variable thickness, makes it possible to vary the diffusion errors introduced, and consequently makes it possible to have a system for compensating the aliasing phenomenon, which is characteristic of digital projection systems.

Moreover, the solution according to the invention makes it possible to achieve a reduction in the cost of making light sources. In fact, the possibility of working with systems without collimators, diffusers or reflectors allows a significant reduction in the cost of implementation, and a considerable reduction in the number of LEDs in the matrixes, while also simplifying the associated thermal regulation systems.

The invention is described by way of example only, without limiting the scope of application, according to its preferred embodiments, but it shall be understood that the invention may be modified and/or adapted by experts in the field without thereby departing from the scope of the invention, as defined in the claims herein.

## Claims

1. 3D printing apparatus of the bottom-up photo-curing type, comprising a LED matrix LCD light source (12), above which a tank (10) is arranged, containing a photo-curing liquid material, inside which an extraction plate (16) is immersed, provided with means of movement with alternating rectilinear motion along a direction perpendicular to the bottom (11) of said tank (10), from a position at a distance from the bottom (11) of said tank (10) equal to the thickness of a layer obtainable by photo-curing of said photo-curing liquid material, the bottom (11) of said tank (10) being made up of an elastic membrane transparent to the radiation of said light source (12), said tank (10) being positioned in correspondence with an opening of a support plate (18), said apparatus comprising means for the relative movement of said light source (12) with respect to said elastic membrane, from a position in which the display (13) of said light source (12) is in contact with said elastic membrane, to a position in which the display (13) of said light source (12) is separated from said elastic membrane, **characterised in that** the distance (dL) between the LEDs of said LED matrix (14) is

$$dL = \sqrt{(E_{TOT}/\pi\, \delta_{LED})}$$

wherein $E_{TOT}$ is the nominal energy of the LEDs being used and $\delta_{LED}$ is the set density of energy and the distance $d_{LCD}$ between said LED matrix and said display (13) is defined according to the emission diagram of said LEDs, namely is such that, in correspondence of the display (13), given the emission angle $\alpha$ of each LED, is

$$d_{LCD} = dL \cdot \cot(\alpha/2)$$

to be apt to avoid the use of diaphragms and collimators, and the thickness (D) of said membrane is chosen according to the distance (dLCD) between said LED matrix (14) and said display (13) and is determined as a function of an acceptable error, expressed as a function of the size p of the single pixel of said display (13) and equal to p/2, and is determined by the equation

$$D = p/2 \cdot \cot(\alpha/2)$$

to introduce a diffusion system, equal to the acceptable error, apt to help compensate the aliasing phenomenon.

2. 3D printing apparatus according to claim 1, **characterised in that** said light source (12) is coupled, with possibility of rotation around a hinge axis, to said support plate (18), the opposite side of said light source (12) being coupled to a handling system.

3. 3D printing method of the bottom-up photo-curing type, implemented by the apparatus of claims 1-2, comprising the following sequence of steps:

a) forming of a solid layer on an extraction plate (16) by photo-curing of a liquid photo-curing material contained within a tank (10), in the space between the extraction plate (16) and an elastic membrane that forms the bottom (11) of said tank, in which an LCD display (13) of a light source (12) is in contact with the underside of said elastic membrane;
b) distancing of said LCD display (13) from said elastic membrane;
c) lifting said extraction plate (16), with progressive detaching of said elastic membrane;
d) returning of said light source (12) to its initial position, with said LCD display (13) in contact with said elastic membrane;
e) lowering said extraction plate (16) down to a position in which the last layer of photo-cured material is at a distance of one layer to be formed with respect to said elastic membrane.

4. 3D printing method of the bottom-up photo-curing type, implemented by the apparatus of claim 1, comprising the following sequence of steps:

a) forming of a solid layer on an extraction plate (16) by photo-curing of a liquid photo-curing material contained within a tank (10), in the space between the extraction plate and an elastic membrane that forms the bottom (11) of said tank, in which an LCD display is in contact with the underside of said elastic membrane;
b) distancing of said elastic membrane, and of said tank, and at the same time of said extraction plate, from said LCD display, with progressive detaching of said elastic membrane from said display;
c) returning of said elastic membrane, and of said tank said to their initial position, in contact with said display, said extraction plate remaining motionless, with progressive detaching of said elastic membrane from the last layer of photo-cured material of the object being formed;
d) lowering said extraction plate down to a position in which the last layer of photo-cured material is at a distance of one layer to be formed with respect to said elastic membrane.

**Patentansprüche**

1. 3D-Druckgerät vom Typ Bottom-up-Lichthärtung, mit einer LED-Matrix-LCD-Lichtquelle (12), über der ein Tank (10) angeordnet ist, der ein lichthärtendes flüssiges Material enthält, in das eine Extraktionsplatte (16) eingetaucht ist, versehen mit einem Bewegungsmittel mit wechselnder geradliniger Bewegung entlang einer Richtung senkrecht zum Boden (11) des besagten Tanks (10) von einer Position in einem Abstand vom Boden (11) des besagten Tanks (10), welcher der Dicke einer Schicht entspricht, die durch Fotoaushärten des lichthärtenden flüssigen Materials erreicht werden kann. Der Boden (11) des besagten Tanks (10) besteht aus einer elastischen Membran, die für die Strahlung der besagten Lichtquelle (12) durchlässig ist, wobei der besagte Tank (10) in Übereinstimmung mit einer Öffnung einer Stützplatte (18) positioniert ist. Das besagte Gerät umfasst Mittel zur relativen Bewegung der besagten Lichtquelle (12) in Bezug auf die besagte elastische Membran aus einer Position, in der die Anzeige (13) der besagten Lichtquelle (12) mit der besagten elastischen Membran in Berührung kommt, an eine Position, in der die Anzeige (13) der besagten Lichtquelle (12) von der besagten elastischen Membran getrennt ist, **dadurch gekennzeichnet, dass** der Abstand (dL) zwischen den LEDs der besagten LED-Matrix (14)

$$dL = \sqrt{(ETOT/\pi\ \delta LED)}$$

beträgt, wobei ETOT die Nennenergie der verwendeten LEDs und 5LED die eingestellte Energiedichte ist, und der Abstand dLCD zwischen der besagten LED-Matrix und der besagten Anzeige (13) ist nach dem Emissionsdiagramm der besagten LEDs definiert, nämlich so, dass er in Übereinstimmung mit der Anzeige (13), unter Berücksichtigung des Emissionswinkels α einer jeden LED,

$$dLCD = dL \cdot cotg(\alpha/2)$$

beträgt und geeignet ist, die Verwendung von Blenden und Kollimatoren zu vermeiden. Die Dicke (D) der besagten Membran wird entsprechend dem Abstand (dLCD) zwischen der besagten LED-Matrix (14) und der besagten Anzeige (13) gewählt und als Funktion eines akzeptablen Fehlers bestimmt, ausgedrückt als Funktion der Größe p des einzelnen Pixels der besagten Anzeige (13) und gleich p/2, und dies wird bestimmt durch die Gleichung

$$D = p/2 \cdot cotg(\alpha/2)$$

um ein Diffusionssystem einzuführen, das dem akzeptablen Fehler entspricht, um das Aliasing-Phänomen zu kompensieren.

2. 3D-Druckvorrichtung nach Anspruch 1, **dadurch gekennzeichnet, dass** die besagte Lichtquelle (12) mit der Möglichkeit der Drehung um eine Scharnierachse an die besagte Trägerplatte (18) gekoppelt ist, wobei die gegenüberliegende Seite der besagten Lichtquelle (12) an ein Handhabungssystem gekoppelt ist.

3. 3D-Druckverfahren vom Typ Bottom-up-Lichthärtung, verwirklicht durch das Gerät nach den Ansprüchen 1-2, die folgende Schrittfolge umfassend:

   a) Bildung einer festen Schicht auf einer Extraktionsplatte (16) durch Lichthärtung eines flüssigen lichthärtenden Materials in einem Tank (10) im Raum zwischen der Extraktionsplatte (16) und einer elastischen Membran, die den Boden (11) des besagten Tanks bildet, bei dem eine LCD-Anzeige (13) einer Lichtquelle (12) die Unterseite der besagten elastischen Membran berührt;
   b) Entfernen der besagten LCD-Anzeige (13) von der besagten elastischen Membran;
   c) anheben der besagten Extraktionsplatte (16) unter schrittweiser Ablösung der besagten elastischen Membran;
   d) Rückkehr der besagten Lichtquelle (12) in ihre Ausgangsposition, wobei die besagte LCD-Anzeige (13) mit der besagten elastischen Membran in Berührung kommt;
   e) absenken der Extraktionsplatte (16) in eine Position, in der sich die letzte Schicht des lichtgehärteten Materials in einem Abstand von einer zu bildenden Schicht in Bezug auf die besagte elastische Membran befindet.

4. 3D-Druckverfahren vom Typ Bottom-up-Lichthärtung, verwirklicht durch das Gerät nach Anspruch 1, die folgende Schrittfolge umfassend:

   a) Bildung einer festen Schicht auf einer Extraktionsplatte (16) durch Lichthärtung eines flüssigen, lichthärtenden Materials, das sich in einem Tank (10) im Zwischenraum zwischen der Rückhalteplatte und einer elastischen Membran befindet, die den Boden (11) des besagten Tanks bildet, in dem eine LCD-Anzeige die Unterseite der besagten elastischen Membran berührt;
   b) Entfernung der besagten elastischen Membran und des besagten Tanks und gleichzeitig der besagten Extraktionsplatte von der besagten LCD-Anzeige mit schrittweiser Ablösung der besagten elastischen Membran von der besagten Anzeige;
   c) Rückführung der besagten elastischen Membran und des besagten Tanks in ihre Ausgangslage, in Kontakt mit der besagten Anzeige, wobei die besagte Extraktionsplatte bewegungslos verbleibt und sich die besagte Membran nach und nach von der letzten Schicht lichthärtenden Materials des Objekts ablöst, das gerade gebildet wird;
   d) absenken der besagten Extraktionsplatte herunter in eine Position, in welcher die letzte Schicht lichtgehärteten Materials, die gebildet werden soll, sich in einem Abstand von einer Schicht in Bezug auf die besagte elastische Membran befindet.

**Revendications**

1.  Appareil d'impression 3D par photopolymérisation ascendante, comprenant une source lumineuse LCD à matrice LED (12), au-dessus de laquelle est disposée un réservoir (10) contenant un matériau liquide photopolymérisable, à l'intérieur duquel est immergée une plaque d'extraction (16), pourvue de moyens de déplacement avec un mouvement rectiligne alterné selon une direction perpendiculaire au fond (11) dudit réservoir (10), à partir d'une position située à une distance du fond (11) dudit réservoir (10) égale à l'épaisseur d'une couche pouvant être obtenue par photopolymérisation dudit matériau liquide photopolymérisable, le fond (11) dudit réservoir (10) étant constitué d'une membrane élastique transparente au rayonnement de ladite source lumineuse (12), ledit réservoir (10) étant positionné en correspondance avec une ouverture d'une plaque de support (18), ledit appareil comprenant des moyens pour le déplacement relatif de ladite source lumineuse (12) par rapport à ladite membrane élastique, d'une position dans laquelle l'écran (13) de ladite source lumineuse (12) est en contact avec ladite membrane élastique, à une position dans laquelle l'écran (13) de ladite source lumineuse (12) est séparé de ladite membrane élastique, **caractérisé par le fait que** la distance (dL) entre les LED de ladite matrice de LED (14) est de

    $$dL = \sqrt{(E_{TOT}/\pi\ \delta LED)}$$

    dans lequel ETOT est l'énergie nominale des LED utilisées et 5LED est la densité d'énergie définie et la distance dLCD entre ladite matrice de LED et ledit écran (13) est défini en fonction du diagramme d'émission desdites LED, à savoir est tel que, en correspondance de l'écran (13), étant donné l'angle d'émission $\alpha$ de chaque LED, est

    $$dLCD = dL \cdot cotg(\alpha/2)$$

    pour pouvoir éviter l'utilisation de diaphragmes et de collimateurs, et l'épaisseur (D) de ladite membrane est choisie en fonction de la distance (dLCD) entre ladite matrice de LED (14) et ledit écran (13) et est déterminée en fonction d'une erreur acceptable, exprimée en fonction de la taille p du pixel unique dudit écran (13) et égale à p/2, et est déterminée par l'équation suivante

    $$D = p/2 \cdot cotg(\alpha/2)$$

    pour introduire un système de diffusion, égal à l'erreur acceptable, apte à aider à compenser le phénomène de repliement.

2.  Appareil d'impression 3D selon la revendication 1, **caractérisé en ce que** ladite source lumineuse (12) est couplée, avec possibilité de rotation autour d'un axe de charnière, à ladite plaque de support (18), le côté opposé de ladite source lumineuse (12) étant couplé à un système de manutention.

3.  Méthode d'impression 3D par photopolymérisation ascendante, mise en œuvre par l'appareil des revendications 1-2, comprenant la séquence d'étapes suivante :

    a) la formation d'une couche solide sur une plaque d'extraction (16) par photopolymérisation d'un matériau photopolymérisable liquide contenu dans un réservoir (10), dans l'espace entre la plaque d'extraction (16) et une membrane élastique qui forme le fond (11) dudit réservoir, dans lequel un écran LCD (13) d'une source lumineuse (12) est en contact avec la face inférieure de ladite membrane élastique;
    b) l'éloignement de l'écran LCD (13) de la membrane élastique;
    c) le soulèvement de la plaque d'extraction (16) avec détachement progressif de la membrane élastique;
    d) le retour de ladite source lumineuse (12) à sa position initiale, avec ledit écran LCD (13) en contact avec ladite membrane élastique;
    e) l'abaissement de ladite plaque d'extraction (16) jusqu'à une position dans laquelle la dernière couche de matériau photopolymérisé se trouve à une distance d'une couche à former par rapport à ladite membrane élastique.

4.  Méthode d'impression 3D par photopolymérisation ascendante, mise en œuvre par l'appareil de la revendication 1, comprenant la séquence d'étapes suivante :

a) la formation d'une couche solide sur une plaque d'extraction (16) par photopolymérisation d'un matériau photopolymérisable liquide contenu dans un réservoir (10), dans l'espace entre la plaque d'extraction et une membrane élastique qui forme le fond (11) dudit réservoir, dans lequel un écran LCD est en contact avec la face inférieure de ladite membrane élastique;

b) l'éloignement de ladite membrane élastique, et dudit réservoir, et en même temps de ladite plaque d'extraction, de l'écran LCD, avec détachement progressif de ladite membrane élastique de l'écran;

c) le retour de ladite membrane élastique et dudit réservoir à leur position initiale, en contact avec ledit écran, la plaque d'extraction restant immobile, avec détachement progressif de ladite membrane élastique de la dernière couche de matériau photopolymérisé de l'objet en cours de formation;

d) l'abaissement de ladite plaque d'extraction jusqu'à une position dans laquelle la dernière couche de matériau photopolymérisé se trouve à une distance d'une couche à former par rapport à ladite membrane élastique.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3356122 A
- WO 2019186611 A

- US 2018029296 A